# EUROPÄISCHE PATENTSCHRIFT

(11) **EP 2 798 316 B1**
(45) Veröffentlichungstag und Bekanntmachung des Hinweises auf die Patenterteilung: **06.11.2019**
(21) Anmeldenummer: 12798231.2
(22) Anmeldetag: 22.11.2012
(51) Int. Cl.: G01F 1/66

(54) **ULTRASCHALLWANDLER FÜR EIN ULTRASCHALL-DURCHFLUSSMESSGERÄT**
TRANSDUCER FOR ULTRASONIC FLOWMETER
TRANSDUCTEUR POUR DEBITMÈTRE À ULTRASONS

(30) Priorität: 29.12.2011 DE 102011090079
(43) Veröffentlichungstag der Anmeldung: 05.11.2014
(73) Patentinhaber: Endress+Hauser Flowtec AG, 4153 Reinach (CH)
(72) Erfinder: UEBERSCHLAG, Pierre, 68300 Saint-Louis (FR); BEZDEK, Michal, 4147 Aesch (CH); BERGER, Andreas, 79686 Hasel-Glashütten (DE)
(74) Vertreter: Andres, Angelika Maria
(86) Internationale Anmeldenummer: PCT/EP2012/073386
(87) Internationale Veröffentlichungsnummer: WO 2013/097992

(56) Entgegenhaltungen:
- EP-A1- 0 766 071
- EP-A2- 1 498 700
- EP-A2- 1 840 530
- DE-A1- 2 835 367
- DE-A1-102005 003 398

## Beschreibung

Die vorliegende Erfindung betrifft einen Ultraschallwandler für ein Ultraschall-Durchflussmessgerät, mit einem elektromechanischen Wandlerelement, welches mit geeigneten Mitteln gegen ein Ultraschallfenster des Ultraschallwandlers vorgespannt ist, wobei eine erste Oberfläche des elektromechanischen Wandlerelements gegen das Ultraschallfenster zeigt.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung des Fluids ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Die Ultraschallwandler bestehen normalerweise aus einem elektromechanischen Wandlerelement, z.B. ein piezoelektrisches Element, und einem Ultraschallfenster. Im elektromechanischen Wandlerelement werden die Ultraschallwellen als akustische Signale erzeugt und zum Ultraschallfenster geführt und von dort in das Fluid oder Messmedium eingekoppelt. Das Ultraschallfenster wird auch Membran genannt.

Zwischen dem piezoelektrischen Element und dem Ultraschallfenster kann eine so genannte Anpassungsschicht angeordnet sein. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen.

Die WO 2011/000634 A1 zeigt einen Ultraschallwandler mit einem Ultraschallfenster, gegen welches ein elektromechanisches Wandlerelement vorgespannt ist. Zwischen dem elektromechanischen Wandlerelement und dem Ultraschallfenster ist ein duktiler Festkörper als Koppelschicht angeordnet.

Die US 6,508,133 B1 zeigt ein elektromechanisches Wandlerelement mit einem Ultraschallfenster stoffschlüssig verbunden ist, wobei die Oberfläche des elektromechanischen Wandlerelements, welches das Ultraschallfenster berührt, in mehrere Segmente unterteilt ist.

Die EP 0 766 071 A1 zeigt einen Ultraschallwandler mit einem Koppelmittel aus einer Matrix mit darin eingebetteten Glashohlkörpern zwischen einem elektromechanischen Wandlerelement und einem Ultraschallfenster. Die DE 28 35 367 A1 offenbart den Oberbegriff des Anspruchs 1.

Die Aufgabe der Erfindung besteht darin, einen Ultraschallwandler vorzuschlagen, welcher geeignet ist zur Durchflussmessung von Gas.

Die Aufgabe wird gelöst durch den Gegenstand des unabhängigen Anspruchs 1. Weiterbildungen und Ausgestaltungen der Erfindung finden sich in den Merkmalen der abhängigen Ansprüche wieder.

Ein erfindungsgemäßer Ultraschallwandler für ein Ultraschall-Durchflussmessgerät, insbesondere für Gas-Anwendungen, z.B. für die Durchflussmessung von Biogas, umfasst ein elektromechanisches Wandlerelement, beispielsweise ein piezoelektrisches Element, ein Gehäuse mit einem Ultraschallfenster und Mittel, die geeignet sind, das elektromechanische Wandlerelement gegen das Ultraschallfenster vorzuspannen. Dabei liegt eine erste Oberfläche des elektromechanischen Wandlerelements auf dem Ultraschallfenster auf, beispielsweise auch unter Zwischenlage eines Koppelmittels wie Fett, Öl oder eines duktilen, festen Materials, wie z.B. Blei oder Gold. Das elektromechanische Wandlerelement ist dabei nicht stoffschlüssig mit dem Ultraschallfenster verbunden, z.B. aufgeklebt, wie es aus dem Stand der Technik bekannt ist. Entsprechend weist die erste Oberfläche des elektromechanischen Wandlerelements zum Ultraschallfenster.

Erfindungsgemäß ist eine der ersten Oberfläche gegenüberliegende zweite Oberfläche des elektromechanischen Wandlerelements in vier gleich große Segmente unterteilt, und die Segmente der zweiten Oberfläche sind mit den zur Vorspannung geeigneten Mitteln galvanisch verbunden.

Wie in der US 6,508,133 B1 so weist auch das erfindungsgemäße elektromechanische Wandlerelement Schnitte in Ebenen auf, welche parallel zu einer Längsachse des elektromechanischen Wandlerelements verlaufen. Die Schnitte sind dabei jedoch nicht durchgehend, jeder Schnitt bildet lediglich eine tiefe Nut. Die erste Oberfläche ist gemäß einer Weiterbildung der Erfindung eben ausgebildet. Die Segmente weisen jeweils die Form eines Viertelkreises auf, die Schnitte bilden somit im Querschnitt durch das elektromechanische Wandlerelement ein Kreuz. Anders als in der US 6,508,133 B1 weist jedoch die in die Segmente unterteilte Oberfläche des elektromechanischen Wandlerelements vom Ultraschallfenster weg. Die Segmente der zweiten Oberfläche liegen in einer Ebene und bilden den ungeschnittenen Teil der zweiten Oberfläche des elektromechanischen Wandlerelements.

Gemäß einer Ausgestaltung des erfindungsgemäßen Ultraschallwandlers beträgt die Schnitttiefe, also der Abstand vom Nutgrund der durch den Schnitt gebildeten Nut zum ungeschnittenen Teil der zweiten Oberfläche, zumindest 50%, insbesondere mindestens 80% des Abstands von erster Oberfläche zum ungeschnittenen Teil der zweiten Oberfläche des elektromechanischen Wandlerelements, welcher letztgenannte Abstand die Dicke des elektromechanischen Wandlerelements kennzeichnet. Die erste und der ungeschnittene Teil der zweiten Oberfläche des elektromechanischen Wandlerelements verlaufen insbesondere parallel zueinander.

Das elektromechanische Wandlerelement ist erfindungsgemäß gegen das Ultraschallfenster vorgespannt. Dies geschieht mittels einer vorgegebenen Kraft, die auf die zweite Oberfläche des elektromechanischen Wandlerelements mittels der zur Vorspannung geeigneten Mittel aufgebracht wird und in Richtung des Ultraschallfensters wirkt. Zur Vorspannung geeignete Mittel sind dabei beispielsweise Federn, insbesondere exakt eine Feder. Es können jedoch auch zwei oder mehrere Federn dafür vorgesehen sein, beispielsweise konzentrisch angeordnete Schraubendruckfedern. Vorteilhaft ist jedoch eine über die Segmente gleichmäßig verteilte Kraft und, dass die Segmente gleichermaßen zu Schwingungen angeregt werden können. Dazu werden die einzelnen Segmente der zweiten Oberfläche des elektromechanischen Wandlerelements durch die Feder elektrisch kontaktiert, insbesondere mit der Feder galvanisch verbunden.

Gemäß einer Weiterbildung des erfindungsgemäßen Ultraschallwandlers umfassen die zur Vorspannung geeigneten Mittel eine Schraubendruckfeder, welche zur galvanischen Kontaktierung der Segmente der zweiten Oberfläche des elektromechanischen Wandlerelements zumindest eine in einer Ebene verlaufende komplette Windung aufweist.

Gemäß einer Weiterbildung weist die Schraubendruckfeder zur galvanischen Kontaktierung der Segmente der zweiten Oberfläche des elektromechanischen Wandlerelements zumindest zwei in einer Ebene spiralförmig verlaufende Windungen auf.

Insbesondere liegt die mindestens eine, insbesondere liegen die zwei spiralförmig verlaufenden Windungen auf den Segmenten des elektromechanischen Wandlerelements und damit auf dem ungeschnittenen Teil der zweiten Oberfläche auf. Sie liegen in einer Ebene parallel zur Ebene des ungeschnittenen Teils der zweiten Oberfläche des elektromechanischen Wandlerelements.

Werden die zwei Windungen getrennt betrachtet, handelt es sich um eine eben Spirale mit einem Winkel von zumindest 720°.

Durch mehrere Windungen im Bereich des Wandlerelements ist die Kontaktierungsfläche zwischen Feder und elektromechanischem Wandlerelement vergrößert im Vergleich zu einer handelsüblichen Schraubendruckfeder. Eine herkömmliche Schraubendruckfeder ist zumindest abschnittsweise helixförmig oder kegelförmig.

Eine weitere Weiterbildung der Erfindung ist darin zu sehen, dass der Ultraschallwandler eine Anpassungsschicht, insbesondere zur akustischen Impedanzanpassung, aufweist, welche den Ultraschallwandler zur Umwelt hin begrenzt, wobei das Ultraschallfenster zwischen dem elektromechanischen Wandlerelement und der Anpassungsschicht angeordnet ist. Eine akustische Impedanzanpassung erfolgt insbesondere zwischen elektromechanischem Wandlerelement, respektive dem Ultraschallfenster, und einem Fluid, dessen Durchfluss durch eine Rohrleitung mittels des Ultraschallwandlers gemessen werden soll. Die akustische Impedanz von der Anpassungsschicht ist weitergebildet kleiner als 1MRayl. In diesem Fall weist das Fluid eine geringere akustische Impedanz auf, beispielsweise 400 Rayl oder 360 Rayl, und das elektromechanische Wandlerelement weist eine größere akustische Impedanz auf, welche aneinander durch die Anpassungsschicht angepasst werden. Die akustischen Impedanzen von dem elektromechanischen Wandlerelement und dem Ultraschallfenster liegen in einem Intervall von 10 bis 60MRayl, insbesondere im Bereich 30 bis 40 MRayl. Gemäß einer Ausführungsform der Erfindung sind akustischen Impedanzen von dem elektromechanischen Wandlerelement und dem Ultraschallfenster näherungsweise gleich.

Weitergebildet umfasst die Anpassungsschicht eine Verbundmatrix, beispielsweise aus Harz, insbesondere aus Epoxid, mit darin eingebetteten kugelförmigen Körpern, beispielsweise Glaskugeln, Glashohlkugeln oder Keramikhohlkugeln.

Ein erfindungsgemäßer Ultraschallwandler ist somit beispielsweise folgendermaßen aufgebaut. Auf ein Gehäuse, welches den Ultraschallwandler ansonsten zur Umwelt hin begrenzt, ist eine Anpassungsschicht im Bereich des Ultraschallfensters aufgetragen. Diese grenzt mit ihrer Außenkontur den Ultraschallwandler zur Umwelt hin ab. Das Gehäuse des Ultraschallwandlers kann in seiner Gesamtheit einem zu messenden Fluid ausgesetzt sein, oder nur Teile davon. Insbesondere bildet das Ultraschallfenster oder, wenn vorhanden, die Anpassungsschicht eine Grenzfläche zum Fluid. Dadurch wird ein akustisches Signal vom Ultraschallwandler in das Fluid ein- oder aus diesem ausgekoppelt. Das Gehäuse umschließt dabei das elektromechanische Wandlerelement, ein gegebenenfalls zwischen dem elektromechanischen Wandlerelement und dem Ultraschallfenster angeordnetes Koppelmittel und die zur Vorspannung des elektromechanischen Wandlerelements gegen das Ultraschallfenster geeigneten Mittel. Gemäß einer weiteren Weiterbildung wird vorgeschlagen, dass der Ultraschallwandler so ausgestaltet ist, dass das Ultraschallfenster die erste Oberfläche des elektromechanischen Wandlerelements galvanisch berührt, wobei das Ultraschallfenster und die zur Vorspannung geeigneten Mittel geeignet sind, eine Spannung am elektromechanischen Wandlerelement anzulegen und/oder abzugreifen. Dabei ist das Gehäuse entsprechend elektrisch leitend und dient als Elektrode zur elektrischen Kontaktierung des elektromechanischen Wandlerelements. Eine separate Elektrode ist dafür nicht notwendig.

Sind die zur Vorspannung geeigneten Mittel mit dem Ultraschallfenster, beispielsweise mittels des Gehäuses des Ultraschallwandlers, galvanisch verbunden, weist die die galvanische Verbindung einen Widerstand von mindestens 50 Ohm auf. Insbesondere weist der Widerstand einen Widerstand von mindestens 1000 Ohm auf.

Beispielsweise stützen sich die zur Vorspannung geeigneten Mittel auf einem elektrisch nichtleitenden Bauteil des Ultraschallwandlers ab, beispielsweise auf einem Print, auch als Leiterplatte oder Platine bezeichnet, welches das Gehäuse berührt. Ein separater elektrischer Leiter, beispielsweise eine Leiterbahn auf dem Print, zwischen den zur Vorspannung geeigneten Mitteln und dem Gehäuse, respektive dem Ultraschallfenster, realisiert die galvanische Verbindung, beispielsweise unter Zwischenschaltung eines elektrischen Widerstands vorgegebener Größe. Die Mittel zur Vorspannung sind selbst elektrisch leitend.

Eine weitere Weiterbildung der Erfindung sieht vor, dass der Ultraschallwandler ein Gehäuse umfasst, welches zum elektromechanischen Wandlerelement weisende Nasen zur Zentrierung des elektromechanischen Wandlerelements im Gehäuse aufweist.

Gemäß einer weiteren Weiterbildung umfasst der Ultraschallwandler ein Gehäuse, welches ein topfförmig ausgebildetes erstes Gehäuseteil aufweist, dessen Boden das Ultraschallfenster bildet und auf welchem das elektromechanische Wandlerelement angeordnet ist, und welches Gehäuse ein zweites Gehäuseteil aufweist, mit einem axialen Anschlag zur Befestigung des Ultraschallwandlers an oder in einem Messrohr, wobei eine Funktion des Abstands jeder Schnittkante einer Außenkontur des Gehäuses vom Ultraschallfenster bis zum axialen Anschlag zu einer Längsachse des Gehäuses monoton ist, wobei die Schnittkante in einer Ebene liegt, in welcher die Längsachse des Gehäuses liegt.

Gemäß einer weiteren Ausgestaltung des erfindungsgemäßen Ultraschallwandlers ist jeder Winkel, welcher die Schnittkante mit der Längsachse des Gehäuses des Ultraschallwandlers einschließt, kleiner 60°.

Eine weitere Ausführungsform der Erfindung sieht vor, dass das zweite Gehäuseteil eine Öffnung mit einem im Wesentlichen kreisförmigen Querschnitt aufweist, wobei auch das elektromechanische Wandlerelement einen im Wesentlichen kreisförmigen Querschnitt aufweist und wobei der Radius des elektromechanischen Wandlerelements um mindestens 10% größer ist als der Radius der Öffnung. Die Öffnung dient z.B. der Durchführung eines elektrischen Leiters zur elektrischen Kontaktierung des elektromechanischen Wandlerelements.

Weitergebildet ist das erste Gehäuseteil mit dem zweiten Gehäuseteil stoffschlüssig verbunden, insbesondere verschweißt, insbesondere mit Laser. Da das elektromechanische Wandlerelement, gegebenenfalls über eine Koppelschicht, das Ultraschallfenster berührt, muss die zum Ultraschallfenster geleitete Wärme, eingetragen durch die Verschweißung, begrenzt werden, um das elektromechanische Wandlerelement und/oder die Koppelschicht nicht zu beschädigen. Daher sollte die Temperatur des Ultraschallfensters nicht mehr als 120°C, insbesondere nicht mehr als 80°C erreichen.

Dazu sind die Querschnittsfläche A einer Gehäusewand des ersten Gehäuseteils, der Abstand d der Verbindungsfläche von erstem und zweitem Gehäuseteil zum Ultraschallfenster, also der Abstand der Schweißnaht zum Ultraschallfenster, und der Werkstoff des ersten Gehäuseteils so aufeinander abgestimmt, dass sich das Ultraschallfenster auf eine Temperatur kleiner 80°C aufheizt. Edelstahl als Werkstoff für das erste Gehäuseteil weist typischerweise eine Wärmeleitfähigkeit von 10 bis 100 W/(m^{∗}K) auf.

Ein so ausgestalteter Ultraschallwandler wird erfindungsgemäß hergestellt, indem das elektromechanische Wandlerelement in das erste oder zweite Gehäuseteil eingebracht wird, insbesondere indem es in das erste Gehäuseteil eingelegt wird, insbesondere auf das Ultraschallfenster aufgelegt wird, beispielsweise unter Zwischenlage eines Koppelmittels, und anschließend das zweite Gehäuseteil auf das erste Gehäuseteil aufgelegt wird, insbesondere umschließend die Mittel zur Vorspannung, und anschließend das erste Gehäuseteil mit dem zweiten Gehäuseteil stoffschlüssig verbunden werden, insbesondere miteinander verschweißt werden, insbesondere mittels Laser und insbesondere so, dass sich das Ultraschallfenster auf eine Temperatur kleiner 80°C aufheizt.

Die Erfindung lässt zahlreiche Ausführungsformen zu. Einige davon sind nachfolgend anhand der Figuren näher erläutert werden. Gleiche Elemente sind in den Figuren mit gleichen Bezugszeichen versehen.
- Fig. 1: zeigt einen erfindungsgemäßen Ultraschallwandler im Schnitt,
- Fig. 2: zeigt einen Ausschnitt aus Fig. 1,
- Fig. 3: zeigt ein erfindungsgemäßes elektromechanisches Wandlerelement.

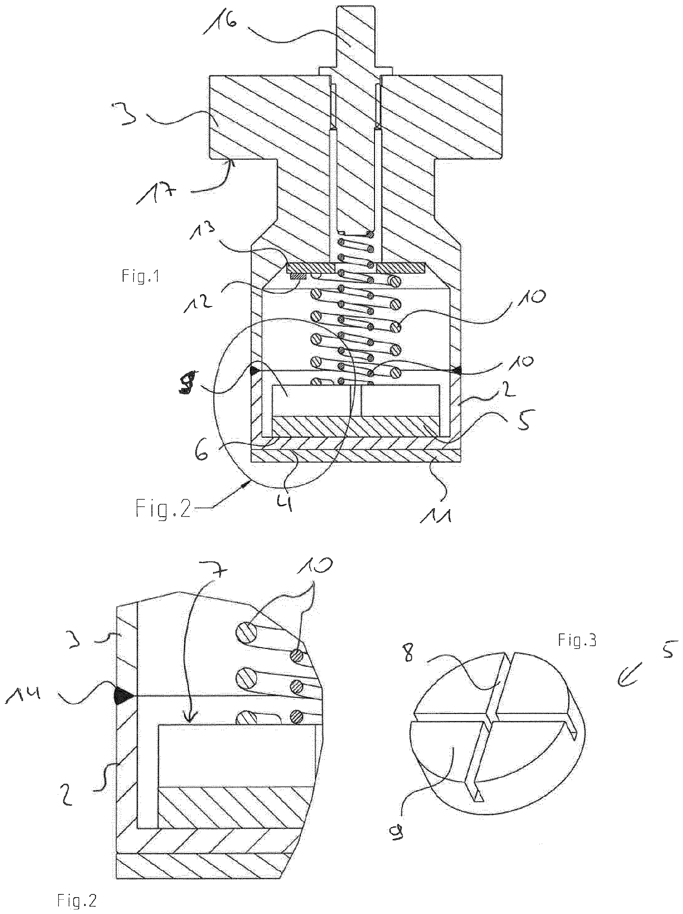

In Fig. 1 ist ein erfindungsgemäßer Ultraschallwandler 1 geschnitten dargestellt, Details sind den Figuren 2 und 3 zu entnehmen. Das Gehäuse des Ultraschallwandlers 1 umfasst ein erstes Gehäuseteil 2 und ein zweites Gehäuseteil 3, welche mittels einer Schweißnaht 14 stoffschlüssig miteinander verbunden sind. Das erste Gehäuseteil 2 weist die Form eines Topfes auf und umfasst ein Ultraschallfenster 4 als Boden. Es umschließt ein elektromechanisches Wandlerelement 5, welches auf dem Ultraschallfenster 4 angeordnet und mittels geeigneten Mitteln 10 gegen dieses vorgespannt ist. Zwischen dem elektromechanischen Wandlerelement 5 und dem Ultraschallfenster 4 kann ein Koppelmittel aufgebracht sein.

Da das zweite Gehäuseteil 3 in einem unteren Bereich der Figur eine zu den Wänden des ersten Gehäuseteils 2 kongruente hülsenförmige Gestalt aufweist, um es mit diesem zu verbinden, aber in einem oberen Bereich konisch verjüngend ausgestaltet ist, wird das elektromechanische Wandlerelement 5 und gegebenenfalls das Koppelmittel vor der Verbindung von ersten und zweitem Gehäuseteil 2 und 3 eingebracht. Um diese jedoch bei der Verbindung nicht zu beschädigen, sind die Querschnittsfläche A einer Gehäusewand des ersten Gehäuseteils 2, der Abstand d der Verbindungsfläche von erstem und zweitem Gehäuseteil 2 zum Ultraschallfenster 4, also der Abstand der Schweißnaht 14 zum Ultraschallfenster 4, und der Werkstoff des ersten Gehäuseteils ausgewählt und aufeinander abgestimmt. Edelstahl als Werkstoff für das erste Gehäuseteil 2 weist typischerweise eine Wärmeleitfähigkeit von 10 bis 100 W/(m^{∗}K) auf. Das zweite Gehäuseteil 3 besteht insbesondere aus demselben Werkstoff wie das erste Gehäuseteil 2. Verschweißt werden daher die beiden Gehäuseteile 2 und 3 insbesondere mittels Laser.

Als Mittel zur Vorspannung 10 sind hier zwei Schraubendruckfedern 10 vorgesehen. Sie erzeugen vorgegebene Kräfte in Richtung des Ultraschallfensters 4 und leiten diese in das elektromechanische Wandlerelement 5 ein, wobei dieses dadurch gegen das Uttraschaitfenster 4 gedrückt gehalten wird. Gleichzeitig kontaktieren die Mittel zur Vorspannung 10 das elektromechanische Wandlerelement 5 elektrisch. Somit ist das Aufbringen einer oder mehrerer zusätzlicher Elektroden auf das elektromechanische Wandlerelement 5 überflüssig.

Die zur Vorspannung geeigneten Mittel 10 kontaktieren eine zweite Oberfläche 7 des elektromechanischen Wandlerelements 5 galvanisch. Die erste Oberfläche 6 des elektromechanischen Wandlerelements 5 wird vom Ultraschallfenster 4 elektrisch kontaktiert. Das erste Gehäuseteil 2 ist dazu insbesondere aus einem elektrisch leitfähigen Material hergestellt. Um einen Kurzschluss zu vermeiden sind die Mittel zur Vorspannung 10 mit dem ersten Gehäuseteil 2 berührungsfrei gelagert. Hier stützen sie sich an einer Leitplatte 13 ab, welche auch als elektrischer Isolator dient. Über einen elektrischen Widerstand 12 wird der Stromkreis geschlossen. Hier weist der Ultraschallwandler 1 noch einen Stecker 16 in einer Bohrung im zweiten Gehäuseteil 3 auf, durch welchen die elektrische Kontaktierung und damit die Anregung durch und der Abgriff von den Spannungssignalen am elektromechanischen Wandlerelement 5 erfolgt. Elektrische Leitungen sind hier nicht näher gezeigt.

Erfindungsgemäß ist die erste Oberfläche 6 des elektromechanischen Wandlerelements 5 eben und die zweite Oberfläche 7 ist in vier gleich große viertelkreisförmige Segmente 9 aufgeteilt. In einfacher Weise geschieht dies durch mehrere Schnitte 8 durch die zweite Oberfläche 7 des elektromechanischen Wandlerelements 5.

Eine Anpassungsschicht 11 zur Anpassung der akustischen Impedanzen ist hier außerhalb des Gehäuses des Ultraschallwandlers 1 vorgesehen. Sie ist auf dem Ultraschallfenster 4 so angebracht, dass sich das Ultraschallfenster 4 zwischen der Anpassungsschicht 11 und dem elektromechanischen Wandlerelement 5 befindet. Die Anpassungsschicht 11 berührt somit das Fluid, dessen Durchfluss gemessen werden soll.

In der gezeigten Ausführungsform weist der Ultraschallwandler 1 einen axialen Anschlag 17 im Bereich des zweiten Gehäuseteils 3 auf, welcher gegen einen axialen Anschlag eines dritten Gehäuseteils oder einer Rohrleitung vorspannbar ist, zum Einbau des Ultraschallwandlers 1 in eine Rohrleitung. Dieser axiale Anschlag 17 kann selbst als Dichtungsfläche ausgestaltet sein, oder eine Dichtung wird zwischen ihm und den axialen Anschlag des dritten Gehäuseteils oder der Rohrleitung angeordnet und vorgespannt.

Zur Positionierung des elektromechanischen Wandlerelements 5 an einer vorbestimmten Position im Ultraschallwandler 1 während des Fertigungsprozesses, können hier nicht veranschaulichte Zentriernasen im ersten oder zweiten Gehäuseteil 2 oder 3 vorgesehen werden.

Vorteilhaft ist zudem, eine glatte Oberfläche des Gehäuses des Ultraschallwandlers 1. So ist insbesondere die Schweißnaht nicht erhaben gegenüber der Mantelfläche des Gehäuses ausgeformt. Eine Funktion des Abstands jeder Schnittkante einer Außenkontur des Gehäuses zu einer Längsachse des Gehäuses ist somit vom Ultraschallfenster 4 bis zum axialen Anschlag 17 monoton, wobei die Schnittkante in einer Ebene liegt, in welcher die Längsachse des Gehäuses liegt.

### Bezugszeichenliste

- 1: Ultraschallwandler
- 2: Erstes Gehäuseteil
- 3: Zweites Gehäuseteil
- 4: Ultraschallfenster
- 5: Elektromechanisches Wandlerelement
- 6: Erste Oberfläche des elektromechanischen Wandlerelements
- 7: Zweite Oberfläche des elektromechanischen Wandlerelements
- 8: Schnitt im elektromechanischen Wandlerelement
- 9: Segmente der ersten Oberfläche des elektromechanischen Wandlerelements
- 10: Mittel zur Vorspannung
- 11: Anpassungsschicht
- 12: Widerstand
- 13: Leiterplatte
- 14: Schweißnaht
- 15: Zentriernasen
- 16: Stecker
- 17: Axialer Anschlag

## Patentansprüche

1. Ultraschallwandler für ein Ultraschall-Durchflussmessgerät, mit einem elektromechanischen Wandlerelement (5) und Mittel(10), die geeignet sind, das elektromechanische Wandlerelement (5) gegen das Ultraschallfenster (4) vorzuspannen, wobei eine erste Oberfläche (6) des elektromechanischen Wandlerelements (5) gegen das Ultraschallfenster (4) zeigt,
**dadurch gekennzeichnet,**
**dass** eine der ersten Oberfläche (6) gegenüberliegende zweite Oberfläche (7) des elektromechanischen Wandlerelements (5) in vier gleich große Segmente (9) durch tiefe Nuten unterteilt ist, welche mit den zur Vorspannung geeigneten Mitteln (10) galvanisch verbunden sind.

2. Ultraschallwandler nach Anspruch 1,
**dadurch gekennzeichnet,**
**dass** die zur Vorspannung geeigneten Mittel (10) eine Schraubendruckfeder umfassen, welche zur galvanischen Kontaktierung des elektromechanischen Wandlerelements (5) zumindest eine in einer Ebene verlaufende komplette Windung aufweist.

3. Ultraschallwandler nach einem der Ansprüche 1 oder 2,
**dadurch gekennzeichnet,**
**dass** zwischen dem elektromechanischen Wandlerelement (5) und dem Ultraschallfenster (4) ein Koppelmittel angeordnet ist.

4. Ultraschallwandler nach einem der Ansprüche 1 bis 3,
**dadurch gekennzeichnet,**
**dass** er eine Anpassungsschicht (11) aufweist, welche den Ultraschallwandler zur Umwelt hin begrenzt, wobei das Ultraschallfenster (4) zwischen dem elektromechanischen Wandlerelement (5) und der Anpassungsschicht (11) angeordnet ist.

5. Ultraschallwandler nach Anspruch 4,
**dadurch gekennzeichnet,**
**dass** die Anpassungsschicht (11) eine Verbundmatrix mit darin eingebetteten kugelförmigen Körpern umfasst.

6. Ultraschallwandler nach einem der Ansprüche 1 bis 5,
**dadurch gekennzeichnet,**
**dass** das Ultraschalifenster (4) die erste Oberfläche (6) des elektromechanischen Wandlerelements (5) galvanisch berührt, wobei das Ultraschallfenster (4) und die zur Vorspannung geeigneten Mittel (10) geeignet sind, eine Spannung am elektromechanischen Wandlerelement (5) anzulegen und/oder abzugreifen.

7. Ultraschallwandler nach Anspruch 6,
**dadurch gekennzeichnet,**
**dass** die zur Vorspannung geeigneten Mittel (10) mit dem Ultraschallfenster (4) galvanisch verbunden sind, wobei die galvanische Verbindung einen Widerstand von mindestens 50 Ω aufweist.

8. Ultraschallwandler nach einem der Ansprüche 1 bis 7,
**dadurch gekennzeichnet,**
**dass** er ein Gehäuse umfasst, weiches das elektromechanische Wandlerelement (5) umschließt, wobei das Gehäuse zum elektromechanischen Wandlerelement (5) weisende Nasen zur Zentrierung des elektromechanischen Wandlerelements (5) im Gehäuse aufweist.

9. Ultraschallwandler nach einem der Ansprüche 1 bis 8,
**dadurch gekennzeichnet,**
**dass** er ein Gehäuse umfasst, welches das elektromechanische Wandlerelement (5) umschließt, wobei das Gehäuse ein topfförmig ausgebildetes erstes Gehäuseteil (2) aufweist, dessen Boden das Ultraschallfenster (4) bildet, und, dass das Gehäuse ein zweites Gehäuseteil (3) aufweist mit einem axialen Anschlag zur Befestigung des Ultraschallwandlers an einem Messrohr, wobei eine Funktion des Abstands jeder Schnittkante einer Außenkontur des Gehäuses vom Ultraschallfenster bis zum axialen Anschlag zu einer Längsachse des Gehäuses monoton ist, wobei die Schnittkante in einer Ebene liegt, in welcher die Längsachse des Gehäuses liegt.

10. Ultraschallwandler nach Anspruch 9,
**dadurch gekennzeichnet,**
**dass** der erste Gehäuseteil (2) mit dem zweiten Gehäuseteil (3) stoffschlüssig verbunden ist.

## Claims

1. Ultrasonic transducer for an ultrasonic flowmeter, with an electromechanical transducer element (5) and resources (10) that are suitable for pretensioning the electromechanical transducer element (5) against the ultrasonic window (4), wherein a first surface (6) of the electromechanical transducer element (5) points against the ultrasonic window (4),
**characterized**
**in that** a second surface (7) - situated opposite the first surface (6) - of the electromechanical transducer element (5) is divided into four segments (9) of the same size by deep grooves, which are galvanically connected to the resources (10) that are suitable for pretensioning.

2. Ultrasonic transducer as claimed in Claim 1,
**characterized**
**in that** the resources (10) that are suitable for pretensioning comprise a threaded compression spring, which has at least one complete winding, situated on a plane, for the establishment of the galvanic contact of the electromechanical transducer element (5).

3. Ultrasonic transducer as claimed in one of the Claims 1 or 2,
**characterized**
**in that** a coupling agent is arranged between the electromechanical transducer element (5) and the ultrasonic window (4).

4. Ultrasonic transducer as claimed in one of the Claims 1 to 3,
**characterized**
**in** the transducer features an adaptation layer (11), which limits the ultrasonic transducer towards the environment, wherein the ultrasonic window (4) is arranged between the electromechanical transducer element (5) and the adaptation layer (11).

5. Ultrasonic transducer as claimed in Claim 4,
**characterized**
**in that** the adaptation layer (11) comprises a composite matrix with spherical bodies embedded therein.

6. Ultrasonic transducer as claimed in one of the Claims 1 to 5,
**characterized**
**in that** the ultrasonic transducer (4) galvanically touches the first surface (6) of the electromechanical transducer element (5), wherein the ultrasonic window (4) and the resources (10) suitable for pretensioning are suitable for applying and/or measuring a voltage at the electromechanical transducer element (5).

7. Ultrasonic transducer as claimed in Claim 6,
**characterized**
**in that** the resources (10) suitable for pretensioning are galvanically connected to the ultrasonic window (4), wherein the galvanic connection presents a resistance of at least 50 Ω.

8. Ultrasonic transducer as claimed in one of the Claims 1 to 7,
**characterized**
**in that** it comprises a housing which encompasses the electromechanical transducer element (5), wherein the housing features lugs that face towards the electromechanical transducer element (5), wherein said lugs are provided to center the electromechanical transducer element (5) in the housing.

9. Ultrasonic transducer as claimed in one of the Claims 1 to 8,
**characterized**
**in that** it comprises a housing, which encompasses the electromechanical transducer element (5), wherein the housing has a first housing section (2) designed in the shape of a pot, whose base forms the ultrasonic window (4), and in that the housing has a second housing section (3) with an axial stop to secure the ultrasonic transducer on a measuring tube, wherein a function of the distance of each cut edge of an outer contour of the housing - from the ultrasonic window to the axial stop in relation to a longitudinal axis of the housing - is monotonic, said cut edge being located on a plane on which the longitudinal axis of the housing is located.

10. Ultrasonic transducer as claimed in Claim 9,
**characterized**
**in that** the first housing section (2) is connected with the second housing section (3) by means of substance to substance bonding.

## Revendications

1. Convertisseur ultrasonore pour un débitmètre ultrasonore, avec un élément convertisseur électromécanique (5) et des moyens (10), qui sont adaptés pour la précontrainte de l'élément convertisseur électromécanique (5) contre la fenêtre ultrasonore (4), une première surface (6) de l'élément convertisseur électromécanique (5) étant orientée à l'opposé de la fenêtre ultrasonore (4),
**caractérisé**
**en ce qu'**une deuxième surface (7) - située à l'opposé de la première surface (6) - de l'élément convertisseur électromécanique (5) est scindée en quatre segments (9) de taille identique au moyen de rainures profondes, lesquelles sont reliées galvaniquement avec les moyens (10) adaptés pour la précontrainte.

2. Convertisseur ultrasonore selon la revendication 1,
**caractérisé**
**en ce que** les moyens (10) adaptés pour la précontrainte comprennent un ressort masculin hélicoïdal de compression, qui présente au moins un enroulement complet, situé dans un plan, destiné à la mise en contact galvanique de l'élément convertisseur électromécanique (5).

3. Convertisseur ultrasonore selon la revendication 1 ou 2,
**caractérisé**
**en ce qu'**est disposé un moyen de couplage entre l'élément convertisseur électromécanique (5) et la fenêtre ultrasonore (4).

4. Convertisseur ultrasonore selon la revendication 1 à 3,
**caractérisé**
**en ce qu'**il présente une couche d'adaptation (11), qui limite le convertisseur ultrasonore par rapport à l'environnement, la fenêtre ultrasonore (4) étant disposée entre l'élément convertisseur électromécanique (5) et la couche d'adaptation (11).

5. Convertisseur ultrasonore selon la revendication 4,
**caractérisé**
**en ce que** la couche d'adaptation (11) comprend une matrice composite avec des corps sphériques qui y sont incorporés.

6. Convertisseur ultrasonore selon l'une des revendications 1 à 5,
**caractérisé**
**en ce que** le convertisseur ultrasonore (4) entre en contact galvanique avec la première surface (6) de l'élément convertisseur électromécanique (5), la fenêtre ultrasonore (4) et les moyens (10) adaptés pour la précontrainte étant adaptés à appliquer et/ou à prélever une tension sur l'élément convertisseur électromécanique (5).

7. Convertisseur ultrasonore selon la revendication 6,
**caractérisé**
**en ce que** les moyens (10) adaptés pour la précontrainte sont reliés galvaniquement avec la fenêtre ultrasonore (4), la liaison galvanique présentant une résistance d'au moins 50 Ω.

8. Convertisseur ultrasonore selon l'une des revendications 1 à 7,
**caractérisé**
**en ce qu'**il comprend un boîtier, qui renferme l'élément convertisseur électromécanique (5), le boîtier comportant des ergots pointant vers l'élément convertisseur électromécanique (5), lesquels ergots sont prévus pour le centrage de l'élément convertisseur électromécanique (5) à l'intérieur du boîtier.

9. Convertisseur ultrasonore selon l'une des revendications 1 à 8,
**caractérisé**
**en ce qu'**il comprend un boîtier, qui renferme l'élément convertisseur électromécanique (5), le boîtier comprenant une première partie de boîtier (2) exécutée en forme de pot, dont le fond constitue la fenêtre ultrasonore (4), **en ce que** le boîtier comprend une deuxième partie de boîtier (3) avec une butée axiale destinée à la fixation du convertisseur ultrasonore sur un tube de mesure, une fonction de la distance de chaque arête de coupe d'un contour extérieur du boîtier - depuis la fenêtre ultrasonore jusqu'à la butée axiale par rapport à un axe longitudinal du boîtier - étant monotone, l'arête de coupe se situant dans un plan, dans lequel se situe l'axe longitudinal du boîtier.

10. Convertisseur ultrasonore selon la revendication 9,
**caractérisé**
**en ce que** la première partie de boîtier (2) est reliée par liaison de matière avec la deuxième partie de boîtier (3).
